# EUROPÄISCHE PATENTSCHRIFT

(11) **EP 0 758 471 B1**
(45) Veröffentlichungstag und Bekanntmachung des Hinweises auf die Patenterteilung: **28.07.1999**
(21) Anmeldenummer: 95912136.9
(22) Anmeldetag: 14.03.1995
(51) Int. Cl.: G07C 9/00, A61B 5/117

(54) **PERSONENIDENTIFIKATION MIT BEWEGUNGSINFORMATION**
PERSON IDENTIFICATION BASED ON MOVEMENT INFORMATION
IDENTIFICATION DE PERSONNES SUR LA BASE D'INFORMATIONS SUR DES MOUVEMENTS

(30) Priorität: 15.03.1994 DE 4408792; 20.04.1994 DE 4413788
(43) Veröffentlichungstag der Anmeldung: 19.02.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: WAGNER, Thomas, D-91058 Erlangen (DE); BÖBEL, Friedrich G., D-91080 Uttenreuth (DE); BAUER, Norbert, D-91058 Erlangen (DE)
(74) Vertreter: Leonhard, Frank Reimund, Dipl.-Ing.
(86) Internationale Anmeldenummer: DE9500351
(87) Internationale Veröffentlichungsnummer: WO9525316

(56) Entgegenhaltungen:
- EP-A- 0 225 729
- EP-A- 0 336 032
- EP-A- 0 582 989
- US-A- 4 975 960
- US-A- 5 161 204
- US-A- 5 163 111
- FKT FERNSEH- UND KINO-TECHNIK, Bd. 47, Nr. 1, 1993 HEIDELBERG,DE, Seiten 33-42, XP 000329675 HARTWIG 'Digitale Bildcodierung (Teil 12)'
- IEEE TRANSACTIONS ON IMAGE PROCESSING , Bd. 2, Nr. 4, Oktober 1993 NEW YORK, US, Seiten 481-498, XP 000412063 ZAKHOR 'Edge-based 3-D camera motion estimation with application to video coding'

## Beschreibung

Das technische Gebiet der Erfindung ist die Personenidentifikation mittels Auswertung von Informationen, die der Person an sich anhaften und ohne Verwendung von Hilfsmitteln, wie Ausweise, Schlüssel oder Geheimzahlen.

Das sichere Erkennen - und damit das Identifizieren - von Personen ist nach wie vor technisch ungelöst. Derzeitige Ansätze gehen davon aus, daß sich Personen **über Hilfsmittel** identifizieren (Beispiele dafür sind der oft gefälschte Ausweis, die verlorengegangenen Schlüssel oder die allzu häufig vergessene Geheimzahl). Auch Passwörter haben im heutigen Leben nur eine kurze Lebensdauer, da sie entweder zu einfach gestaltet sind oder von unberechtigten Personen leicht in Erfahrung gebracht werden können. Gerade die zuletzt genannte Gefahr tritt häufig dann auf, wenn man eilig eine Zugangsberechtigung benötigt und das eingegebene (vermeintlich richtige) Passwort nicht funktioniert.

Sichere Identifizierung von Personen heißt aber auch: Schützen eines lokalen Bereiches gegen unberechtigten Zutritt. Beispiele hier sind militärische Anlagen oder gefährdete Bereiche in Kernkraftwerken. Auch der Zutritt zu Informationen, wie Akten oder Geheimdienstinformationen, die in unserem Zeitalter zunehmend Bedeutung erlangen, fordert eine genau abgestimmte Zugangsberechtigung für Personen, abhängig von ihrer Zuverlässigkeit und ihrem Kompetenzbereich.

Der Stand der Technik kennt die Analyse **statischer** Bilder, so der Gesichtserkennung, der Erkennung von Handabdrücken oder die Analyse von Fingerabdrücken. Aufgrund der starken Varianz im Aussehen der Person als auch der Schwierigkeit, reproduzierbare Aufnahmebedingungen zu schaffen, zeigen diese Systeme eine "Ungenauigkeit", die noch so hoch ist, daß von einer "sicheren Personenerkennung" nicht gesprochen werden kann. Sicher kann eine Personenerkennung nur dann werden, wenn sie mit (nahezu) 100%iger Sicherheit arbeitet.

**US-A 4,975,960** (Petajan) erläutert einen Erkennungsalgorithmus für Personen, der über eine Auswertung von Graustufen aufeinanderfolgender Bilder und den Vergleich von markanten Bereichen und ihrer Bewegung ("nostrils" als Nasenöffnungen oder Lippen) arbeitet; für den Vergleich werden Vorlagen gespeichert (dort Spalte 2, Zeilen 38 bis 43).

**Das Problem der Erfindung** ist es, die Ungenauigkeit bei der Personenerkennung weiter zu reduzieren. Dazu wird Anspruch 1 und Anspruch 8 vorgeschlagen. Ergänzt und konkretisiert wird die Erfindung mit den Ausgestaltungen der abhängigen Ansprüche 2 bis 7 und 9 oder 10. Unabhängig davon schlägt die Erfindung auch die Verwendung eines synergetischen Computer vor, um die vorgenannten Verfahren zu realisieren (Anspruch 11).

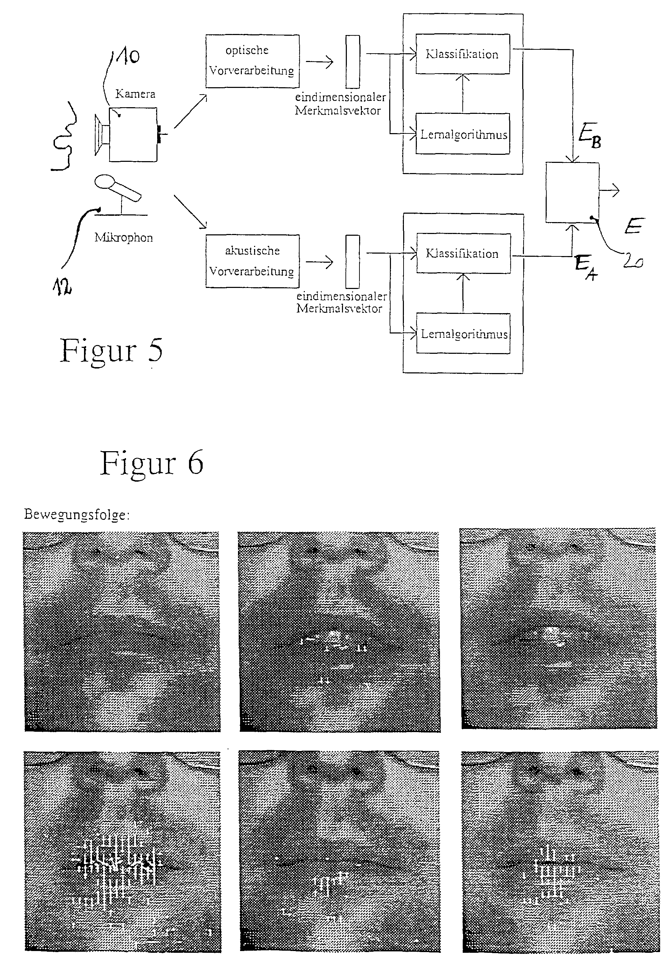

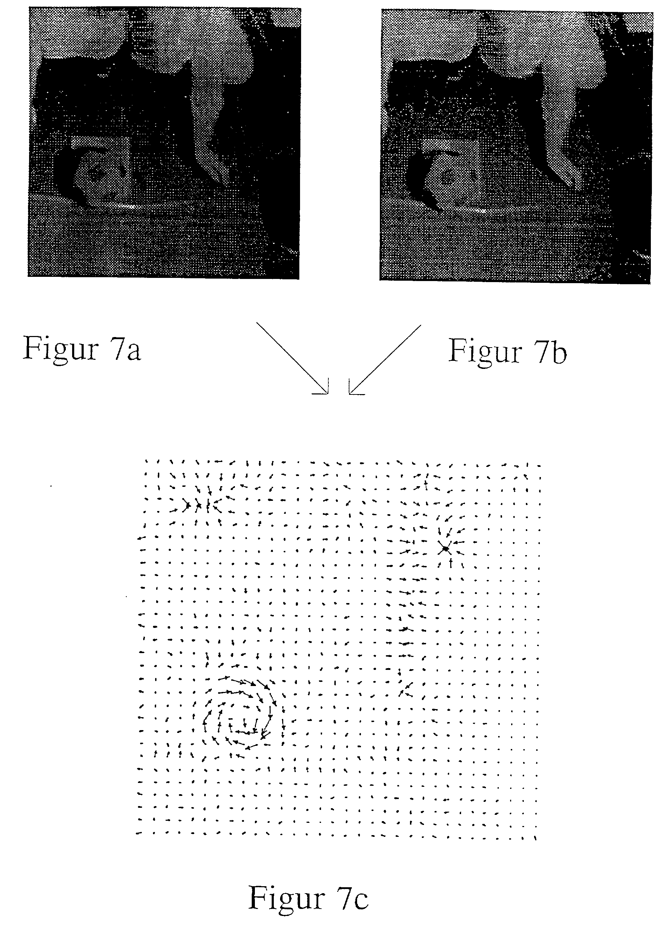

Anstelle des statischen Bildes des Standes der Technik verwendet die Erfindung eine Bildsequenz (Bildfolge). Diese Bildfolge definiert die Bewegungsinformation, die über die Berechnung eines optischen Flusses (vgl. Figur 6 oder Figur 7) ausgewertet wird. Um die Auswertung sicher zu gestalten, wird ein typischer oder ein vorgegebener Bewegungsablauf verwendet, dessen Bildsequenz ausgewertet und mit Vergleichswerten verglichen wird. Vor einem Vergleich kann eine Datenreduktion mittels eines Klassifizierungs-Verfahrens erfolgen (Anspruch 7), mit der eine Filterung großer Datenmengen möglich ist.

Ein typischer Bewegungsablauf kann eine Gang- oder Kopfbewegung sein (Anspruch 3); ein vorgegebener Bewegungsablauf kann die Bewegung eines Gesichtes oder eines Teilbereiches eines Gesichtes (Gesichtszüge) sein, die beim Sprechen eines vorgegebenen Wortes oder Satzes entsteht (Anspruch 2).

Die typischen und vorgegebenen Bewegungsabläufe können vorteilhaft kombiniert werden (Anspruch 4). Die Auswertung der Kombination kann parallel oder ineinander verschachtelt verlaufen.

Zusätzlich zur Bildsequenz-Information kann die Auswertung von statischer Bild-Information eingesetzt werden (Anspruch 5).

Die Bildsequenz-Information und die Auswertung von statischer Bild-Information kann mit der Auswertung akustischer Information ergänzt werden (Anspruch 6), um die Zuverlässigkeit (weiter) zu erhöhen.

Ein synergetischer Computer zur Realisierung des Erkennungsverfahrens im vorgenannten Sinn ist Gegenstand des Anspruches 11; er ist als solches neben der Erläuterung von "adjungierten Prototypen" in einem Tagungsband der Tagung "Artificial Neural Networks and Genetic Algorithms" in Innsbruck (April 1993, Seiten 206 bis 212) näher erläutert. Der Titel dieser Fundstelle ist "Using a Synergetic Computer in an Industrial Classification Problem". Insbesondere unter der dortigen Ziffer 2 wird die hinter einem solchen synergetischen Computer stehende Therorie erläutert, bei der einer der speziellen Algorithmen auf die Lösung einer Matrixinversion zurückgeführt werden kann, anstelle der Integration eines Systems von Differentialgleichungen. Vorgeschlagen wird auch, neurale Netzwerke zu verwenden. Das dortige Anwendungsgebiet war die **Erkennung von Kfz-Felgen**, die einem Gieß- oder Spritzguß-Verfahren entstammen. Dabei verbleiben Reste von Aluminium (oder anderem Metall) an den Felgen, die eine genaue Erfassung erschweren. Hinzu kommt, daß die Position der zu erfassenden Felgen ebenso wie die Orientierung vielfältig und dem System nicht bekannt ist.

Auf einer anderen Konferenz **IECON 1992** in San Diego, California, vom 9. bis zum 13. November 1992 ist in einem Vortrag von Yamasaki und Takahashi ein adaptives Tonerfassungs-System vorgeschlagen worden, bei dem visuelle Effekte ergänzend herangezogen wurden, um auch in der (technischen) Erkennungstechnik den (humaneigenen) "Cocktailparty-Effekt" zu realisieren. Dieser Effekt äußert sich dadurch, daß ein Mensch in der Lage ist, mit seinen Sinnen trotz eines erheblichen Hintergrundgeräusches und eines sehr schlechten S/R-Verhältnisses (S/N-Ratio) bestimmte ihn interessierende Information herauszufiltern. Diese menschliche Eigenschaft ist heute weder genau erforscht, noch kann sie in der hohen Qualität technisch reproduziert werden. Ziel des vorgenannten Vortrages war es also, ein Tonsignal von einer Quelle (einem gesprochenen Satz von einer Person) aus einer Vielzahl von unterschiedlichen Umgebungsgeräuschen herauszufiltern und dabei das Signal/Rausch-Verhältnis zu verbessern. Als Anwendungsgebiet nennt der Vortrag die Erfassung von fehlerhaften Maschinenkomponenten (durch Erkennen "seltsamer" Geräusche) oder die Erfassung von menschlichen Stimmen in lärmender Umgebung (als Mensch/Maschine-Interface, bei dem eine Person der Maschine auf akustischem Wege mitteilt, welche weiteren Schritte sie einsetzen soll). Die im Vortrag erwähnte Technik verwendet neben akustischen Informationen optische Informationen und verbindet diese beiden Informationsquellen, so daß eine "Sensor-Fusion" entsteht. Die Verbindung der beiden Informationen erfolgt in zwei Ebenen, einem Ton-Untersystem und eine Visual-Untersystem.

**Anders** als die vorgenannten Ansätze verwendet die Erfindung maßgeblich eine Bildsequenz und den optischen Fluß zur Erreichung einer sicheren (hochgenauen) Personenidentifikation. Erst zusätzlich können akustische Informationen herangezogen werden oder statische Bilder ausgewertet werden.

Scheinbar mit einer Bild**sequenz** befaßt sich die **EP-B 082 304** (Siemens); die Bildsequenz, die dort Anwendung findet, ist aber nicht mehr als eine **Vorstufe,** um das geeignete Momentanbild (Einzelbild) zu lokalisieren und in einem üblichen statistischen Vergleichsverfahren mit vorab gespeicherter Information zu vergleichen. Um das dort als "Schlüsselereignis" bezeichnete Momentanbild **während** des Sprechens eines Schlüsselwortes aufzufinden, werden akustisch gewonnene Energiesignale ausgewertet und bei Überschreiten eines Schwellenwertes das relevante Einzelbild aus der fortwährend aufgezeichneten Sequenz ausgesondert, festgehalten und ausgewertet. Zur Auswertung dient kein optischer Fluß, sondern die Verzerrung eines auf den Lippenbereich projizierten Linien- oder Gittermusters **zum Zeitpunkt** des Schlüsselereignisses. Also liegt dort eine bloße **Einzelbild**auswertung vor, die mit akustischer Signalauswertung kombiniert werden kann.

Die Erfindung, wie sie im Anspruch 1 oder 8 mit ihren maßgeblichen Merkmalen umrissen ist, wertet aber **die Sequenz** von Bildern aus, in der das Einzelbild "untergeht".

Das Verständnis der Erfindung soll an einem Ausführungs**beispiel** vertieft werden.

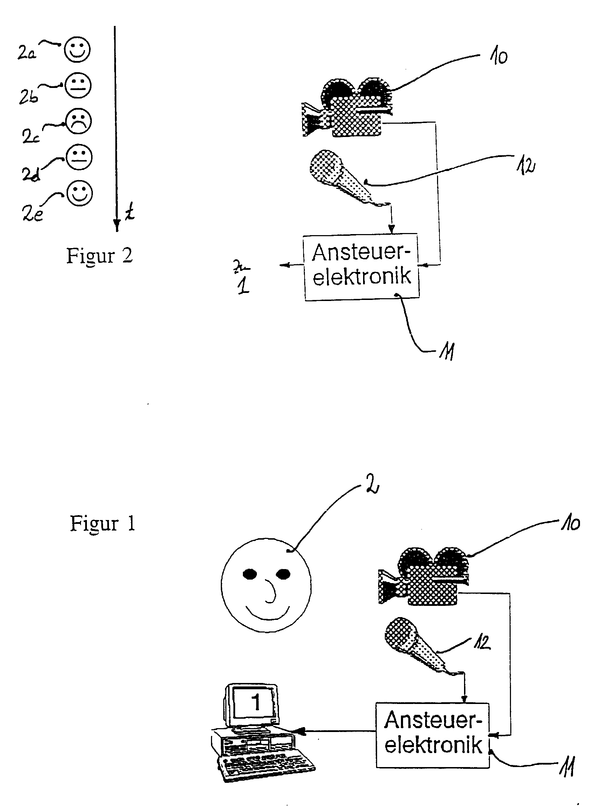

**Figur 1** zeigt ein Beispiel der visuellen und akustischen Erfassung von Informationen, die von einer schematisch dargestellten Person 2 ausgehen.

**Figur 2** veranschaulicht einen vorgegebenen Bewegungsablauf anhand von (schematisch in Folge dargestellten) Gesichtszügen 2a bis 2e über der (senkrecht verlaufenden) Zeitachse t. Die Gesichtszüge werden von einer Hochgeschwindigkeitskamera 10 aufgezeichnet.

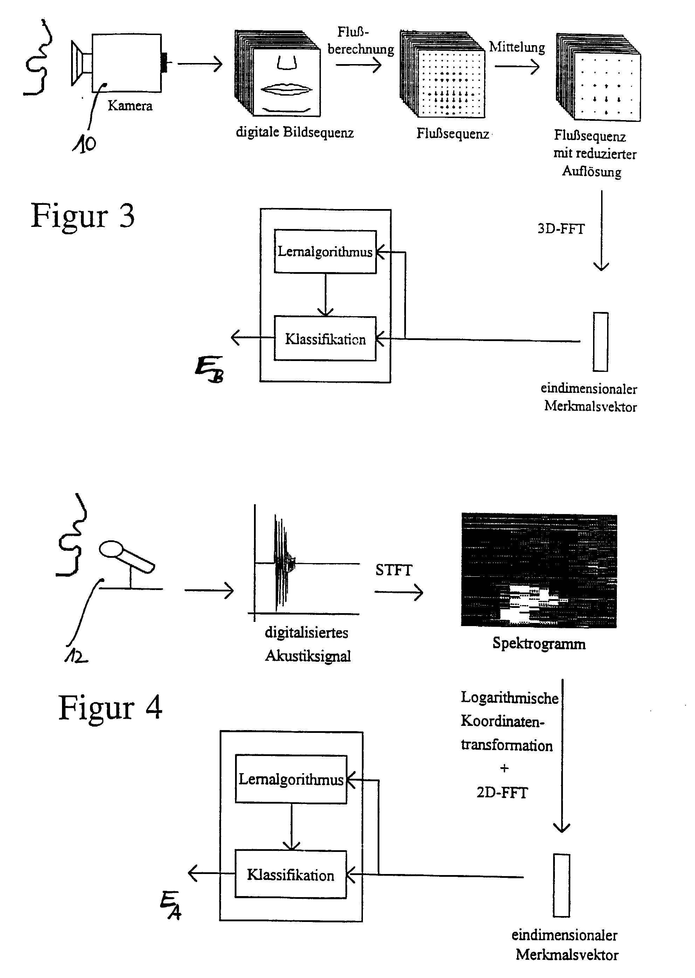

**Figur 3** ist eine Darstellung des **optischen** Auswertepfades, mit dem die Bildsequenzen verarbeitet werden, namentlich über ein Flußvektor-Feld und ein solches mit reduzierter Auflösung hin zu einem einspaltigen Merkmalsvektor, der in ein Klassifikationsverfahren eingespeist wird. Das Klassifikationsverfahren kann in einem synergetischen Computer programmiert sein.

**Figur 4** ist ein mit Figur 3 korrespondierender **akustischer** Auswertepfad, in dem die akustischen Signale digitalisiert und als Spektrogramm dargestellt werden. Der Weg führt auch hier über einen einspaltigen Merkmalsvektor, der in ein Klassifikationsverfahren eingespeist wird, das in einem synergetischen Computer programmiert sein kann.

**Figur 5** zeigt die Kombination der beiden Auswerteverfahren, wobei die optische und akustische Vorverarbeitung als Blockschaltbild jeweils diejenigen Auswerteschritte der Figuren 3 bzw. 4 beinhalten, die vor dem Merkmalsvektor liegen. Die Ausgangssignale der optischen Klassifikation und der akustischen Klassifikation werden in einer Verknüpfung 20 zusammengefaßt und ergeben das Auswertesignal E, das bei Verwendung zur Personen-Identifikation die Aussage ist, ob die das Kennwort sprechende Person eine der vorgespeicherten Personen ist.

Die **Figur 6** veranschaulicht anhand einer Lippenfolge beim Sprechen einer Person den Bewegungsablauf, der zum optischen Fluß von der Schaltung gemäß Figur 3 umgesetzt wird. Die weißen Richtungspfeile sind charakteristisch für die Bewegung bestimmter Bereiche der Lippengegend.

**Figur 7a, 7b und 7c** veranschaulichen einen beispielhaften anderen Bewegungsablauf, hier zwei Bilder einer aufgezeichneten Bildsequenz und das sich daraus ergebende Flußvektor-Feld in Figur 7c. Deutlich ist die Bewegung des Balles mit Richtung und Rotation erkennbar, ebenso wie die Bewegung des Armes des Kindes, obwohl in den beiden nebeneinandergestellten Momentanbildern gemäß Figur 7a und 7b nahezu kein Unterschied erkennbar ist. Deutlich - geradezu überdeutlich - wird der Bewegungsablauf also mit dem Flußvektorfeld gemäß Figur 7c, das mit der Schaltung gemäß Figur 3 berechnet werden kann.

**In der Figur 1** ist eine Person schematisch mit 2 dargestellt. Ein vorgegebener Bewegungsablauf der Gesichtszüge der (schematisch dargestellten) Person 2 ist in Figur 2 mit 2a bis 2e veranschaulicht.

Das System zur Erkennung der Person 2 verwendet in diesem Beispiel eine Hochgeschwindigkeits-Kamera 10, die auf die Person 2 gerichtet ist, sowie ein Mikrofon 12, das Sprachsignale aufzeichnen kann. Die optischen Signale der Kamera 10 und die Tonsignale des Mikrofons 12 werden einer Ansteuerelektronik 11 zugeführt. Diese Ansteuerlektronik 11 kann die Signale so aufbereiten, daß sie einem Rechner 1 zur Auswertung zugeführt werden können. Dabei ist es sowohl möglich, der Ansteuerelektronik bereits Analog/Digitalwandler beizugeben als auch diese Analog/Digitalwandler in der Auswerteeinheit 1 selbst anzuordnen, so daß die Kopplungen zwischen den Bildinformations-Quellen 10 und 12 auf analoger Basis vorgenommen werden.

Der Verfahrensablauf im Beispiel der Figuren 1 und 2 beginnt mit der Vorgabe eines Wortes, Satzes oder Kennwortes, z.B. dem Namen der zu erkennenden Person. Die Hochgeschwindigkeits-Kamera 10 und das Mikrofon 12 nehmen die dabei entstehenden Signale gleichzeitig auf und leiten sie der Ansteuerelektronik 11 zu. Beim Sprechen des Wortes oder Satzes werden die Bewegungen des Gesichts oder eines Teilbereiches davon aufgezeichnet. Ein Klassifikationsverfahren ist in der Auswerte-Einheit programmiert, um zu große Datenmengen auf ein auswertbares Maß zu reduzieren. Zuvor oder danach wird der optische Fluß der Gesichtsmimik errechnet und anhand von Vergleichswerten mit hoher Sicherheit eine der "gespeicherten Personen" wiedererkannt. Wird keine Übereinstimmung zwischen den vorgespeicherten Daten und der den Zugang oder Zutritt anfordernden Person erkannt, so besteht die Möglichkeit der Wiederholung der vorgenannten Vorgehensweise. Bei höheren Sicherheitsstufen kann es auch ratsam sein, diese Wiederholung nicht vorzunehmen und die Berechtigung sogleich abzulehnen.

Detaillierter ergibt sich die Auswertung in der Auswerteeinheit 1 dadurch, daß der optische Fluß aus der Bildsequenz der Hochgeschwindigkeitskamera 10 berechnet wird, der die Bewegungsinformation in komprimierter Form - jedoch nicht beliebig genau - wiedergibt. Die Bewegungsinformation setzt sich dabei aus einer Mehrzahl von Abtastwerten der Gesichtszüge zusammen, so daß fiktive Punkte des Gesichts eine bestimmte Bewegung oder Bewegungskurve beschreiben, die mit dem optischen Fluß (vgl. Horn und Schunk, "Determining Optical Flow", Artificial Intelligence, Vol. 17, 1981, Seiten 185 bis 203) festgelegt werden. Die akustischen Daten werden mit einer Kurzzeit-Fourier-Transformation (FFT) ausgewertet, um die vorhandene Frequenzinformation adäquat darzustellen.

Das in der Auswerteeinheit 1 programmierte Verfahren und die Ansteuerelektronik 11 der Figuren 1 und 2 finden sich in den **Figuren 3, 4 und 5** wieder. Eingangsgröße in Figur 3 ist das optische Signal über die Kamera 10, Ausgangsgröße ist eine erkannte Person oder ein Erkennungssignal E_{B}. Eingangsgröße in Figur 4 ist ein akustisches Signal über das Mikrofon 12, Ausgangsgröße ist das Erkennungssignal E_{A}. Beide Ausgangsgrößen können in einer Verknüpfung 20 kombiniert werden und bilden das Ausgangssignal E, das für eine erkannte Person stehen kann. Die Verknüpfung 20 kann als einfaches UND-Gatter ausgestaltet sein.

Das in **Figur 3** dargestellte optische Verarbeitungssystem verarbeitet eine echte Bildsequenz, und diese Bildsequenz repräsentiert sich in dem Merkmalsvektor, der dem Klassifikationsverfahren zugeleitet wird. Die aufeinanderfolgenden Bilder der Kamera 10 werden in eine digitale Bildsequenz umgesetzt, aus ihnen wird ein Flußvektor-Feld (Flußsequenz) errechnet, die anhand der Figuren 6 und 7 noch erläutert wird; die Flußsequenz ist ein Bild von Vektorpfeilen. Diese entstandene Flußsequenz wird umgesetzt in eine solche mit reduzierter Auflösung (Mittelung), um die Datenmenge zu beschränken.

Die Flußsequenz mit reduzierter Auflösung kann nochmals fouriertransformiert werden, wenn eine Lage-Invarianz des Bildes oder der Person erwünscht ist.

Das Ergebnis ist der Merkmalsvektor, der der Klassifikation zugeführt wird und aus dem das Erkennungssignal E_{B} abgeleitet ist.

In vergleichbarer Weise arbeitet die akustische Auswertung gemäß **Figur 4.** Das digitalisierte Akustiksignal bildet ein Spektrogramm, bei dem die hohen Amplituden hell dargestellt sind und die geringen Amplituden dunkel erscheinen. Jede Linie ist repäsentativ für eine Abtastzeit.

Auch hier kann eine Koordinaten-Transformation erfolgen, für akustische Signale bietet sich eine logarithmische Transformation an. Mittels dieser Transformation erreicht man eine Tonhöhen-Invarianz, die vergleichbar ist mit der Lage-Invarianz bei der optischen Auswertung gemäß Figur 3.

Der eindimensionale Merkmalsvektor, der für die akustischen Signale gemäß Figur 4 gebildet wird, wird der Klassifikation überreicht, die daraus das Ausgangssignal E_{A} bildet.

Die Klassifikations-Verfahren der Figuren 3 und 4 können auf einem synergetischen Computer programmiert sein.

Die Kombination der Verfahren gemäß Figur 3 und 4 ist **in Figur 5** dargestellt. Jede Datenquelle (akustisch, optisch) extrahiert auf dem beschriebenen Weg geeignete Merkmale, die die akustische Information bzw. die Bildsequenz-Information bestmöglich repräsentieren. Diese Merkmale werden in den einspaltigen Zahlenvektoren festgehalten und der Klassifikation zur Bildung der Ausgangssignale E_{B} oder E_{A} übergeben.

Bevor auf die Auswertung in der Klassifikation und den dort auch programmierten Lernalgorithmus eingegangen wird, soll der optische Fluß anhand der **Figuren 6 und 7a, 7b bzw. 7c** erläutert werden.

Der optische Fluß in Figur 6 ist z.B. derjenige eines Lippenbereiches. Fiktive Punkte haben die weiß dargestellten Bewegungen, die hinsichtlich Länge und Richtung ausgewertet werden können. Bei der Bewegung sind im wesentlichen nur Vektoren des entstehenden Flußvektor-Feldes zu erkennen, die in vertikaler Richtung verlaufen. Anders ist der Sachverhalt bei einer Rotationsbewegung, beispielsweise des Balles gemäß Figuren 7a, 7b. Dort ist in dem Flußvektor-Feld der Figur 7 erkennbar, daß der Ball rotiert. Die Flußvektoren sind also in der Lage, jede Bewegung von fiktiven Punkten auszuwerten und selbst bei statischen, kaum erkennbaren Unterschieden, deutliche Vektoren aufzuzeigen, die den Bewegungsablauf festlegen und markant beschreiben können.

Ebenfalls erkennbar ist die Bewegung des Armes des Kindes und des Knies des Kindes, das in den Figuren 7a und 7b dargestellt ist. Der Kopf ist nahezu unbeweglich.

In den Figuren 3, 4 und 5 ist ein Lernalgorithmus angegeben. Er dient der Festlegung der bestimmten, dem System bekannten Personen. Bei einem solchen Lernverfahren auf einem synergetischen Computer wird entweder für den optischen oder für den akustischen Informationspfad die Vielzahl der Merkmale, die für jede Klasse berechnet worden ist, zu adjungierten Prototypen umgerechnet. Für jede Klasse - jede Klasse entspricht einer Person - existiert ein adjungierter Prototyp. Dieser adjungierte Prototyp hat die Eigenschaft, diejenigen Merkmale in der Bewertung stark zu berücksichtigen, die signifikante Unterschiede zwischen einzelnen Klassen (einzelnen Personen) aufzeigen, während andere Merkmale, die in allen Klassen nahezu gleich sind, stark unterdrückt werden. Er ist "kontrastbildend".

Mittels des Lernverfahrens werden die adjungierten Prototypen berechnet, diese adjungierten Prototypen ermöglichen die zielstrebige Klassifikation von noch unbekannten optischen oder akustischen Merkmalsvektoren.

Ist das Lernverfahren einmal ausgeführt und besteht ein Datensatz an Klassen, so können zu erkennende Personen (ein zu klassifizierender Merkmalsvektor oder ein zu klassifizierendes Muster) leicht erkannt werden. Der Merkmalsvektor wird gemäß den Schaltungen von Figur 3 und Figur 4 bzw. Figur 5 erstellt und dann der Klassifikation übergeben, die auf die gelernten Klassen zurückgreifen kann.

Die bereits gelernten adjungierten Prototypen, die die Eigenheiten jeder einzelnen Klasse (jeder einzelnen Person) zum Ausdruck bringen, werden im Klassifikationsmodus dann dem noch unbekannten Merkmalsvektor zugeordnet und als "schon dagewesen" erkannt oder als unbekannt zurückgewiesen.

Eine vorteilhafte Ergänzung dieser Sequenz- und Akustik-Auswertungen bildet die Auswertung von Einzelbildern der aufgezeichneten Bildsequenz. Als geeignete Einzelbilder haben sich das Anfangs- und Endbild eines kurzen Zeitabschnittes erwiesen, in dem die dynamische Erkennung erfolgt; sie können zusätzlich als Informationsquelle für die Festlegung der zu identifizierenden Person herangezogen werden.

Werden alle drei Datenquellen kombiniert, so können diese drei Sensor-Eingangssignale in ein Klassifikations-Verfahren eingegeben werden, das wie zuvor erläutert arbeitet.

Die vorerwähnte Verfahrensweise zur Erkennung von Personen hat in einem Versuchsaufbau ergeben, daß unabhängig von der Umgebungsbedingung (Hintergrund, Skalierung, Lichteinfluß) zuverlässige Identifikationsraten erhalten werden.

Besonders vorteilhaft ist an dem beschriebenen Verfahren, daß die zu identifizierende Person keine Hilfsmittel, wie Schlüssel oder Ausweise verwenden muß. Auch sind keine Markierungen oder Kennzeichnungen an der jeweiligen Person erforderlich. Die der Identifikation zugrundeliegenden Bewegungsabläufe, das Sprechen von vorgegebenen Worten oder das Ausführen typischer Bewegungsabläufe, kann häufig gewechselt werden, so daß eine nicht zugangsberechtigte Person sich auf die jeweilige Erkennungsprobe nicht vorbereiten oder einstellen kann.

## Patentansprüche

1. Verfahren zur computer-gestützten Erkennung von Personen, bei dem Bewegungsinformationen aus einer Bildsequenz, die aufgrund eines typischen oder vorgegebenen Bewegungsablaufs an oder von der Person entstehen, von einer Kamera (10) aufgezeichnet, über die Berechnung eines optischen Flusses ausgewertet und mit Vergleichswerten verglichen (1) werden.

2. Verfahren nach Anspruch 1, bei dem der vorgegebene Bewegungsablauf die Bewegung der Gesichtszüge der zu erkennenden Person beim Sprechen eines vorgegebenen Wortes oder Satzes ist.

3. Verfahren nach Anspruch 1, bei dem der typische Bewegungsablauf eine Gang- oder Kopfbewegung der zu erkennenden Person ist.

4. Verfahren nach Anspruch 2 und 3, bei dem ein typischer Bewegungsablauf mit einem vorgegebenen Bewegungsablauf kombiniert erfaßt wird.

5. Verfahren nach einem der obigen Ansprüche, bei dem die Auswertung des Bewegungsablaufs mit der Auswertung von statischen Bildern kombiniert wird.

6. Verfahren nach einem der obigen Ansprüche, bei dem die Auswertung der Bildsequenz und/oder der statischen Bilder mit der Auswertung von Audioinformation kombiniert wird.

7. Verfahren nach einem der obigen Ansprüche, bei dem der Vergleich eine Klassifikation eines Merkmalsvektors einer noch nicht erkannten Person mit Hilfe von - eine jeweilige Klasse repräsentierenden und aufgrund eines Lernverfahrens erhaltenen - adjungierten Prototypen ist.

8. **Lernverfahren** in einem Personen-Erkennungsverfahren nach einem der obigen Ansprüche, bei dem aus einer optischen Bildsequenz, die bei einem typischen oder vorgegebenen Bewegungsablauf an oder von einer Person erfaßt wird, und einem daraus gebildeten optischen Flußvektorfeld ein Merkmalsvektor ermittelt wird, zu dem ein adjungierter Prototyp - computergestützt - errechnet wird, der als eine Klasse in ein Klassifikations-Verfahren mit zumindest einer weiteren ebenso ermittelten Klasse übernommen wird, um für Vergleiche in dem Personen-Erkennungsverfahren zu dienen.

9. Verfahren nach Anspruch 8, bei dem aus einem akustischen Signal ein Spektrogramm gebildet wird, das in einen Merkmalsvektor umgesetzt und - computergestützt - zu einem weiteren adjungierten Prototyp umgerechnet wird.

10. Verfahren nach Anspruch 8 oder 9, wobei der Merkmalsvektor über eine zwischengeschaltete Fourier-Transformation gebildet wird.

11. **Verwendung** eines synergetischen Computers für ein Verfahren gemäß einem der vorhergehenden Ansprüche.

## Claims

1. A method for the computer supported recognition of persons, in which movement information from a series of pictures, which arise based on a typical or pre-determined movement sequence to or from the person, is recorded by a camera (10), evaluated via the calculation of an optical flow and compared (1) with reference values.

2. A method according to Claim 1, in which the predetermined movement sequence is the movement of facial features of the person to be recognised in the speaking of a predetermined word or sentence.

3. A method according to Claim 1, in which the typical movement sequence is a walking or head movement of the person to be recognised.

4. A method according to Claims 2 and 3, in which a typical movement sequence is captured combined with a predetermined movement sequence.

5. A method according to one of the foregoing claims, in which the evaluation of the movement sequence is combined with the evaluation of still pictures.

6. A method according to one of the foregoing claims, in which the evaluation of the picture sequence and/or the still pictures is combined with the evaluation of audio information.

7. A method according to one of the foregoing claims, in which the comparison is a classification of a characteristic vector of a not yet known person with the aid of adjoint prototypes - representing a particular category and received on the basis of a learning process.

8. A learning process in a person identification process according to one of the foregoing claims, in which a characteristic vector is obtained from an optical picture sequence, which is captured from a typical or predetermined movement sequence, and an optical flow vector field formed from it, against which an adjoint prototype is - computer assisted - derived, which is accepted as a category in a classification process with at least one further similarly derived category, to serve as comparisons in the person identification process.

9. A method according to Claim 8, in which a spectrogram is formed from an acoustic signal, which is converted into a characteristic vector and - computer assisted - recalculated into an adjoint prototype.

10. A method according to Claim 8 or Claim 9, whereby the characteristic vector is formed via an interposed Fourier transformation.

11. An application of a synergetic computer for a process according to one of the foregoing Claims.

## Revendications

1. Procédé pour la reconnaissance assistée par ordinateur de personnes, dans lequel des informations de mouvements, provenant d'une suite d'images, sur la base d'un déroulement de mouvements, type ou prédéfini, sur, ou de, la personne concernée, enregistrées par une caméra (10), sont évaluées par l'intermédiaire du calcul d'un flux optique et comparées (1) à des valeurs de référence.

2. Procédé selon la revendication 1, dans lequel le déroulement prédéfini de mouvements est le mouvement des traits du visage de la personne à identifier, lorsque celle-ci prononce un mot ou une phrase prédéfini.

3. Procédé selon la revendication 1, dans lequel le déroulement type de mouvements est un mouvement de marche ou un mouvement de tête de la personne à identifier.

4. Procédé selon les revendications 2 et 3, dans lequel un déroulement type de mouvements est détecté en combinaison avec un déroulement prédéfini de mouvements.

5. Procédé selon l'une des revendications précédentes, dans lequel l'évaluation du déroulement de mouvements est combinée à l'évaluation d'images statiques.

6. Procédé selon l'une des revendications précédentes, dans lequel l'évaluation de la suite d'images et/ou des images statiques est combinée à l'évaluation d'une information audio.

7. Procédé selon l'une des revendications précédentes, dans lequel la comparaison est une classification d'un vecteur de particularités d'une personne non encore identifiée, à l'aide de prototypes adjoints, représentant chaque fois une catégorie et obtenus sur la base d'un procédé d'apprentissage.

8. Procédé d'apprentissage dans un procédé de reconnaissance de personnes selon l'une des revendications précédentes, dans lequel, à partir d'une suite d'images optiques, saisies lors d'un déroulement de mouvements, type ou prédéfini, sur une personne ou d'une personne, et à partir d'un champ vectoriel de flux optique formé sur cette base, est déterminé un vecteur de particularités avec calcul d'un prototype adjoint, d'une manière assistée par ordinateur, et qui est pris en charge, en tant que catégorie, dans un procédé de classification avec au moins une autre catégorie également déterminée, afin de servir à des comparaisons dans le procédé de reconnaissance de personnes.

9. Procédé selon la revendication 8, dans lequel un spectrogramme est formé à partir d'un signal acoustique, est transformé en un vecteur de particularités et est converti, de manière assistée par ordinateur, en un autre prototype adjoint.

10. Procédé selon la revendication 8 ou 9, dans lequel le vecteur de particularités est formé par l'intermédiaire d'une transformation de Fourier intercalée.

11. Utilisation d'un ordinateur synergique pour un procédé selon l'une des revendications précédentes.
